# EUROPÄISCHE PATENTANMELDUNG

(11) **EP 4 160 882 A1**
(43) Veröffentlichungstag der Anmeldung: **05.04.2023**
(21) Anmeldenummer: 21200238.0
(22) Anmeldetag: 30.09.2021
(51) Int. Cl.: H02K 5/16, H02K 1/18

(54) **ELEKTRISCHE MASCHINE MIT EINEM GEHÄUSE**

(71) Anmelder: Siemens Aktiengesellschaft, 80333 München (DE)
(72) Erfinder: Cepek, Thomas, 12487 Berlin (DE)
(74) Vertreter: Siemens Patent Attorneys

(57) **Zusammenfassung**

Die Erfindung betrifft eine elektrische Maschine (10) mit einem Gehäuse (1) und einem Stator (12). Das Gehäuse (1) weist eine doppelwandige Lageraufnahme (7,8) auf. Die elektrische Maschine weist neben dem Stator (12) insbesondere auch ein erstes statorseitiges Kopplungselement (31) auf und das Gehäuse (1) ein erstes gehäuseseitiges Kopplungselement (21) aufweist, wobei das erste statorseitige Kopplungselement (31) und das erste gehäuseseitige Kopplungselement (21) in einer Achshöhe (26) der elektrischen Maschine (10) sind und wobei das erste statorseitige Kopplungselement (31) und das erste gehäuseseitige Kopplungselement (21) im Bereich (20) des Statorblechpaketes (25) sind.

## Beschreibung

Die Erfindung betrifft eine elektrische Maschine. Die elektrische Maschine weist ein Gehäuse, das Maschinengehäuse auf.

Eine elektrische Maschine ist beispielsweise ein Motor oder ein Generator. Elektrische Maschinen können Synchronmaschinen oder Asynchronmaschinen sein. Die elektrische Maschine weist elektrische Leiter in einem Aktivteil aus. Das Aktivteil ist beispielsweise ein Stator bzw. ein Läufer der elektrischen Maschine. Der Läufer der elektrischen Maschine kann beispielsweise auch Permanentmagnete aufweisen und damit insbesondere ein Passivteil sein. Der Stator der elektrischen Maschine weist elektrische Leiter auf. Der Stator der elektrischen Maschine ist in einem Gehäuse der elektrischen Maschine. Der Läufer der elektrischen Maschine ist mittels Lager drehbar gelagert. Das Lager bzw. die Lager sind im Gehäuse der elektrischen Maschine aufgenommen.

Bei einer elektrischen Maschine sind Hauptbaugruppen so miteinander zu verbunden, dass gewünschten Betriebsparameter sicher erreicht werden. Hauptbaugruppen einer elektrischen Maschine sind z.B. der Stator, der Läufer, das Gehäuse bzw. die Lager. Bei einer elektrischen Maschine kann der Stator in das Maschinengehäuse eingeschweißt sein bzw. werden, wodurch Schwingungen und Körperschall auf die Gehäusestruktur übertragen werden können. Wird das Maschinengehäuse auf einer Anlage befestigt, können unter den Füßen des Maschinengehäuses Schwingungsdämpfer angebracht werden, so dass das Maschinengehäuse und der starr mit dem Maschinengehäuse verbundene Stator von der restlichen Anlage etwas entkoppelt sind.

Eine Verbindung von Hauptbaugruppen betrifft dabei die Kopplung, d.h. die Verbindung von Stator und Maschinengehäuse (Gehäuse der elektrischen Maschine). Über diese Verbindung, welche eine Kopplung von Stator und Gehäuse darstellt, werden statische bzw. dynamische Kräfte vom Stator zum Maschinengehäuse bzw. umgekehrt übertragen. Weiterhin ist mit der Kopplung auch die genaue Ausrichtung des Stators zum Maschinengehäuse zu gewährleisten. Da am Maschinengehäuse über die Lageraufnahmen und Lager auch die Rotorachse zum Maschinengehäuse ausgerichtet wird, hat die Kopplung von Stator und Maschinengehäuse somit auch einen Einfluss auf die Ausrichtung von Stator und Rotor. Der Rotor kann auch als Läufer bezeichnet werden. Die Kopplung von Stator und Maschinengehäuse ist insbesondere eine Grundlage für einen effektiven Betrieb der elektrischen Maschine im Rahmen der geforderten Betriebsparameter. Mögliche Betriebsparameter betreffen dabei beispielsweise Schwingungen, eine Steifigkeit, eine Unwucht und/oder eine Achsausrichtung des Läufers. Entsprechend geltender internationalen und/oder nationaler Normen haben elektrische Maschinen insbesondere verifizierte Schwingwerte im Betrieb einhalten. Daraus ergeben sich insbesondere bestimmte Anforderungen an die Steifigkeit des Maschinengehäuses und insbesondere der darin integrierten Lageraufnahme.

Eine Aufgabe der Erfindung ist es, die Verbindung zwischen Hauptbaugruppen der elektrischen Maschine zu verbessern. Dies betrifft vorteilhaft beispielsweise die Verbesserung der schwingungstechnischen Eigenschaften der elektrischen Maschine.

Eine Lösung der Aufgabe ergibt sich beispielsweise bei einer elektrischen Maschine nach Anspruch 1. Weiter Ausgestaltungen ergeben sich beispielsweise gemäß der Ansprüche 2 bis 14.

Bei einer elektrischen Maschine weist das Gehäuse der elektrischen Maschine eine doppelwandige Lageraufnahme auf. Eine doppelwandige Lageraufnahme ist insbesondere für eine schwingungskritische elektrische Maschinen vorteilhaft. Maschinengehäuse können im Bereich der Lageraufnahme auch mit einer dicken Stahlplatte ausgeführt werden, die beispielsweise zusätzlich mit einigen Versteifungsrippen auf der Innenseite versehen sind. Eine dicke Stahlplatte für die Lageraufnahme führt jedoch zu hohem Gewicht des Gehäuses. Ein weiterer Nachteil nur einer schweren und Dicken Stahlplatte für die Lageraufnahme des Lagers bzw. der Lager der elektrischen Maschine kann sein, dass selbst mit den Versteifungsrippen nicht immer die Einhaltung der geforderten Schwingwerte sichergestellt werden kann. Gegebenenfalls sich nach einer Erprobung der Maschine weitere Zusatzversteifungen anzubringen. Diese Probleme können durch eine doppelwandige Lageraufnahme vermieden werden. Die beiden Wandungen der Lageraufnahme weisen insbesondere einen Abstand auf, welcher der axialen Erstreckung des Lagers entspricht.

In einer Ausgestaltung der elektrischen Maschine weist die doppelwandige Lageraufnahme zumindest zwei Wandungen auf. Eine doppelwandige Lageraufnahme kann also auch drei oder mehr Wandungen aufweisen, da diese zumindest zwei Wandungen aufweist. Derartige Lageraufnahme mit zwei oder mehr Wandungen können auch als mehrwandige Lageraufnahmen bezeichnet werden. Durch die doppelwandige Lageraufnahme kann die Steifigkeit der Lageraufnahme erhöht werden. Damit kann durch diese vorteilhafte Gestaltung der Lageraufnahme insbesondere ein Mehreinsatz von Material in Grenzen gehalten werden.

In einer Ausgestaltung der elektrischen Maschine ist zwischen der ersten Wand (Wandung) und der zweiten Wand (Wandung) der doppelwandigen Lageraufnahme eine Versteifung. Dies erhöht die Stabilität. In einer Ausgestaltung der elektrischen Maschine weist die Versteifung eine Vielzahl von Rippen auf. Auch dadurch kann die Steifigkeit erhöht werden. In einer weiteren Ausgestaltung der elektrischen Maschine weist die Versteifung eine Vielzahl von Platten auf. Die Platten sind zwischen den Wandungen und mit diesen Wandungen fest verbunden. Auch dadurch kann die Steifigkeit verbessert und beeinflusst werden.

In einer Ausgestaltung der elektrischen Maschine ist das Lager nur mit einer Wandung der doppelwandigen Lageraufnahme verbunden. Diese Verbindung ist insbesondere starr. Die Wandung ist insbesondere jeweils die stirnseitige Wandung. Durch die doppelwandige Ausführung der Lageraufnahme ergibt sich auch für nur eine Wandung eine Erhöhung der Steifigkeit.

In einer Ausgestaltung der elektrischen Maschine weist diese ein Gehäuse und einen Stator auf, wobei der Stator ein erstes statorseitiges Kopplungselement aufweist und das Gehäuse ein erstes gehäuseseitiges Kopplungselement aufweist, wobei das erste statorseitige Kopplungselement und das erste gehäuseseitige Kopplungselement in einer Achshöhe der elektrischen Maschine sind und wobei das erste statorseitige Kopplungselement und das erste gehäuseseitige Kopplungselement im Bereich des Statorblechpaketes sind. Die Achshöhe betrifft dabei die Position der Rotationsachse des Rotors der elektrischen Maschine. Dabei ist insbesondere die Position bezüglich eines Abstandes von einer Ebene zu betrachten, auf welcher die elektrische Maschine befestigbar ist. Der Bereich des Statorblechpaketes betrifft insbesondere einen Bereich zwischen Endplatten des Statorblechpaketes. Die Endplatten sind jeweils stirnseitig am Statorblechpaket. Der Bereich betrifft also eine Position entlang einer Längsausrichtung der elektrischen Maschine, also entlang der Rotationsachse. Die elektrische Maschine weist insbesondere vier Verbindungen zwischen Kopplungselementen auf. Dabei weist das Gehäuse insbesondere vier gehäuseseitige Kopplungselement auf. Der Stator weist insbesondere zumindest zwei oder auch vier oder mehr statorseitige Kopplungselement auf. Ein statorseitiges Kopplungselement weist beispielsweise zwei Verbindungen auf, wobei jeweils eine der Verbindungen eine Verbindung zu einem gehäuseseitigen Kopplungselement darstellt. Zwei Verbindungen zwischen den Kopplungselementen sind insbesondere Spiegelsymmetrisch zur Rotationsachse der elektrischen Maschine. Durch eine der obig beschriebenen oder nachfolgend beschriebenen Varianten der Verbindung zwischen Stator und Gehäuse der elektrischen Maschine ergibt sich eine vorteilhafte Kopplung von Stator und Maschinengehäuse (Gehäuse) bei elektrischen Maschinen. So kann beispielsweise vermieden werden Statoren im Maschinengehäuse so aufzustellen, dass eine Verwendung von Zwischenblechen notwendig ist, wobei mittels Zwischenblechen der Stator ausgerichtet und mit Schrauben im Maschinengehäuse befestigt werden kann. Die Befestigung erfolgte dabei in vertikaler Ausrichtung zur Rotorachse. Dazu wären zusätzliche Bauteile am Stator notwendig. Diese führten gegebenenfalls zum einen dazu, dass der Kraftfluss ungünstiger sein kann und zum anderen, dass es zu Schwingungsanregungen aus dem Stator in das Maschinengehäuse kommen kann. Weiterhin können zusätzliche Bauteile wie Zwischenbleche zu der Notwendigkeit von zusätzlichen Handhabungsvorrichtungen im Fertigungsprozess führen. Durch die Kopplung von Stator und Gehäuse mittels statorseitigen und gehäuseseitigen Kopplungselementen kann der Kraftfluss vom Stator zum Maschinengehäuse optimiert werden. Dadurch ergibt sich insbesondere auch eine sogenannte "Entkopplung" der Schwingungsweiterleitung aus dem Stator in das Maschinengehäuse. Dabei leitet das Kopplungsteil des Stators die Schwingungen des Stators beim Betrieb zum Kopplungsteil des Grundgestells des Gehäuses über.

In einer Ausgestaltung der elektrischen Maschine weist die Verbindung zwischen dem ersten statorseitigen Kopplungselement und dem ersten gehäuseseitigen Kopplungselement Schraubverbindungen auf. Derartige Verbindungen sind leicht wieder zu lösen. In einer weiteren Ausgestaltung können anstelle oder in Kombination beispielsweise auch mit Verbindungen oder Schweißverbindungen verwendet werden. Die Kopplung von Stator und Maschinengehäuse erfolgt insbesondere durch eine Verschraubung von Stator und Maschinengehäuse in einer horizontalen Ausrichtung zur Rotorachse. Die Ausrichtung erfolgt dabei beispielsweise durch eine oder mehrere Passfedern.

In einer Ausgestaltung der elektrischen Maschine weist die Verbindung zwischen dem ersten statorseitigen Kopplungselement und dem ersten gehäuseseitigen Kopplungselement also insbesondere eine Passfeder auf, wobei insbesondere der Stator zum Gehäuse mittels zumindest zweier Passfedern ausgerichtet ist. Eine Passfeder kann beispielsweise jeweils nur für eine Verbindung vorgesehen sein. In einer weiteren Ausgestaltung kann eine Passfeder für zumindest zwei oder mehr Verbindungen vorgesehen sein. Eine Passfeder erstreckt sich beispielsweise nur über die Länge der jeweiligen Verbindung. In einer weiteren Ausgestaltung erstreckt sich eine Passfeder beispielsweise von einer Verbindung zu einer in axialer Richtung befindlichen zweiten Verbindung. Die axiale Richtung ergibt sich dabei aus der Richtung bzw. Ausrichtung der Rotationsachse der elektrischen Maschine. In einer Ausgestaltung der elektrischen Maschine weist das statorseitige Kopplungselement eine Nut zur Aufnahme der Passfeder auf. Ebenso weist in einer Ausgestaltung der elektrischen Maschine auch das gehäuseseitige Kopplungselement eine Nut zur Aufnahme der Passfeder auf. Das statorseitige Kopplungselement ist beispielsweise eine Stange mit einem rechteckigen Profil, wobei sich die Stange über die axiale Länge des Stators erstreckt. Dabei kann die rechteckige Stange in Ringelementen gehalten werden, welche über die axiale Länge des Stators verteilt sind. In einer Ausgestaltung der Verbindungen zwischen Stator und Gehäuse mit einer Passfeder kann die Übertragung von Kräften und Momenten zwischen Stator und Gehäuse, insbesondere einem Grundgestell des Gehäuses, insbesondere auch über die Passfederverbindung erfolgen und nicht beispielsweise allein durch eine Schraubverbindung. Mittels der Passfeder können sehr hohe Kräfte aufgenommen werden, die beispielsweise im Falle eines Kurzschlusses auftreten können. Bei der Verwendung von Passfedern kann in die Kopplungsteile von Stator und Grundgestell beispielsweise jeweils eine Nut für die Passfeder eingebracht werden. Die Passfeder dient auch gleichzeitig zur Herstellung einer exakten Ausrichtung von Stator und Grundgestell, um wiederum eine exakte Ausrichtung von Stator und Rotor sicherzustellen. Die in den Kopplungsteilen zusätzlich vorhandene Schraubenverbindungen zueinander dienen der Fixierung der Verbindung und insbesondere nicht in jeder Ausgestaltung der elektrischen Maschine zur Kraft- und Momentenübertragung. Durch die Verwendung von Passfedern können für eine Ausrichtung des Stators im Gehäuse (also insbesondere dem Grundgestell des Gehäuses) zusätzliche Bauteile entfallen und auch zusätzliche Handhabungsvorrichtungen im Fertigungsprozess eingespart werden.

In einer Ausgestaltung der elektrischen Maschine weist das erste gehäuseseitiges Kopplungselement und ein zweites gehäuseseitiges Kopplungselement jeweils eine Verbindung mit dem ersten statorseitigen Kopplungselement auf. Dadurch kann in einfacher Weise leichter eine korrekte Ausrichtung des Stators erzielt werden.

In einer Ausgestaltung der elektrischen Maschine ist das erste statorseitige Kopplungselement in ein Ringselement des Stators (ein Statorringelement) aufgenommen. Insbesondere ist das statorseitige Kopplungselement in eine Vielzahl von Ringelementen aufgenommen. Auch dies erleichtert die Ausrichtung des Stators.

In einer Ausgestaltung der elektrischen Maschine ist der Stator mittels zumindest vier Verbindungen zwischen gehäuseseitigen Kopplungselementen und statorseitigen Kopplungselementen im Gehäuse befestigt, also aufgenommen, wobei die zumindest vier Verbindungen durch eine flächige Ausgestaltungen Ebenen aufspannen, wobei in einer der Ebenen die Rotationsachse der elektrischen Maschine ist. Die Verbindungen befinden sich also in etwa auf der Höhe der Rotationsachse der elektrischen Maschine. Dies erhöht die Stabilität bzw. Steifigkeit der Befestigung des Stators im Gehäuse.

In einer Ausgestaltung der elektrischen Maschine ist zumindest ein gehäuseseitiges Kopplungselement mit einem Fußpunkt des Gehäuses verbunden. Der Fußpunkt des Gehäuses ist insbesondere der Bereich, der für die Befestigung der elektrischen Maschine beispielsweise auf einem Fundament vorgesehen ist. Durch die Verbindung des gehäuseseitige Kopplungselementes mit dem Fußpunkt des Gehäuses kann in einfacher Weise die Gewichtskraft des Stators in diesem Fußpunkt geleitet werden. Die Verbindung zwischen gehäuseseitige Kopplungselement und dem Fußpunkt des Gehäuses erfolgt also insbesondere direkt.

Durch diese Gestaltung der Kopplung von Stator und Maschinengehäuse wird der Kraftfluss vom Stator zum Maschinengehäuse optimiert. Dadurch ergibt sich auch eine sogenannte "Entkopplung" der Schwingungsweiterleitung aus dem Stator in das Maschinengehäuse. Dabei leitet das Kopplungsteil des Stators (statorseitiges Kopplungselement) die Schwingungen des Stators beim Betrieb zum Kopplungsteil des Grundgestells (gehäuseseitiges Kopplungselement) über. Da dieses insbesondere nur im Bereich der Verbindung von Stator und Grundgestell des Gehäuses bzw. im Fußpunkt am Grundgestell des Gehäuses fixiert ist, kann es als dämpfende Feder wirken. Damit die Gewichtskräfte aus dem Stator aufgenommen werden können und das Kopplungsteil am Grundgestell (gehäuseseitige des Kopplungselement) gestützt wird, ist insbesondere ein Stabilisierungsteil (Stabilisierungselement) mit dem gehäuseseitigen Kopplungselement im Kopf- und Fußpunkt dieses Elementes durch Schweißung verbunden.

In einer Ausgestaltung der elektrischen Maschine weist diese also insbesondere zumindest ein gehäuseseitiges Kopplungselement mit einem Stabilisierungselement auf, wobei das Stabilisierungselement mit dem gehäuseseitigen Kopplungselement verbunden ist. Diese beiden Elemente sind insbesondere senkrechte zueinander angebracht und die Stabilität zu erhöhen.

In einer Ausgestaltung der elektrischen Maschine weist das Gehäuse ein Basiselement und ein Deckelelement auf. Durch diese Segmentierungen des Gehäuses kann der Stator leicht in das Gehäuse eingebaut werden. Das Basiselement ist dabei zur Befestigung der elektrischen Maschine an einem Körper wie zum Beispiel einem Fundament vorgesehen. Das Basiselement weist insbesondere die gehäuseseitigen Kopplungselemente auf.

Bezüglich der Steifigkeit des Gehäuses und damit des Schwingungsverhaltens der elektrischen Maschine kann sich eine vorteilhafte Verbindung zwischen verschiedenen Maßnahmen ergeben. So kann eine doppelwandige Lageraufnahme vorteilhaft mit einer der Varianten der Verwendung von Kopplungselementen zur Befestigung des Stators im Gehäuse verknüpft werden. Auch die axiale Position Kopplungselemente kann hier eine Rolle spielen.

Im Folgenden wird die Erfindung anhand der in den Figuren dargestellten Ausführungsbeispiele näher beschrieben und erläutert. Es zeigen:
- FIG 1: einen Teil eines Gehäuses einer elektrischen Maschine,
- FIG 2: ein Schnittstellenbauteil einer elektrischen Maschine,
- FIG 3: eine Detailansicht aus Figur 2,
- FIG 4: eine doppelwandige Lageraufnahme,
- FIG 5: eine Schnittdarstellung der elektrischen Maschine,
- FIG 6: eine Detailansicht aus Figur 5 und
- FIG 7: eine Detailansicht aus Figur 6.

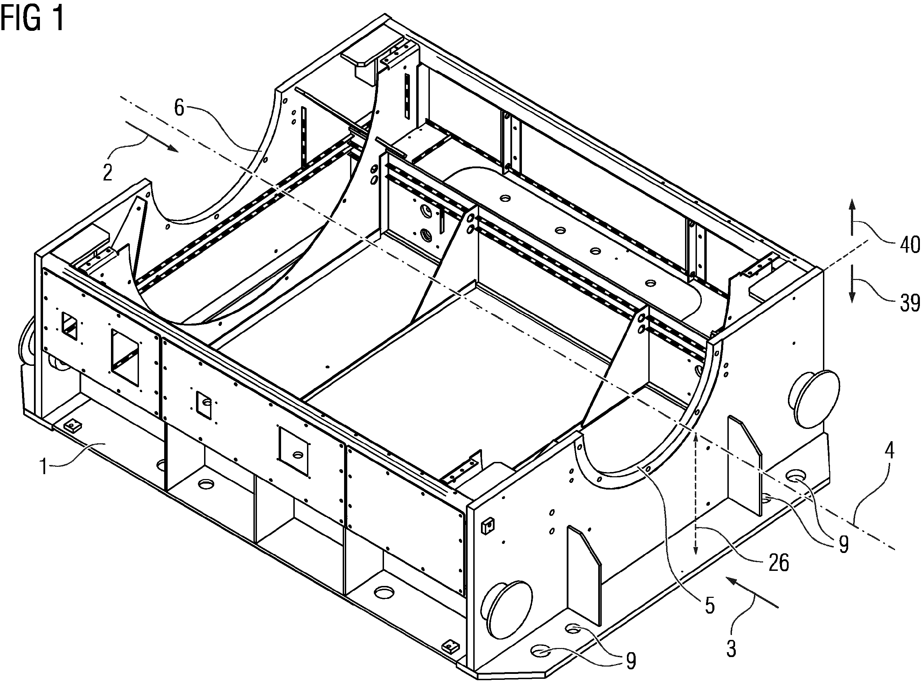

Die Darstellung nach Figur 1 zeigt einen Teil eines Gehäuses 1 einer elektrischen Maschine. Das Gehäuse weist eine erste Stirnseite 2 und eine zweite Stirnseite 3 auf. Der dargestellte Teil des Gehäuses 1 ist bei einem zweigeteilten Gehäuse das Basiselement im Bereich 39. Im Bereich 40 befindet sich das Deckelelement 40, wobei dieses Deckelelement 40 in der Figur 1 nicht dargestellt ist. Die Reaktionsachse 4 der elektrischen Maschine befindet sich auf einer Achshöhe 26. Gezeigt ist ferner eine erste Lageraufnahme 5 und eine zweite Lageraufnahme 6. Diese sind einwandig ausgeführt. Über Löcher 9 im Bereich des Fußpunktes der elektrischen Maschine kann diese befestigt werden.

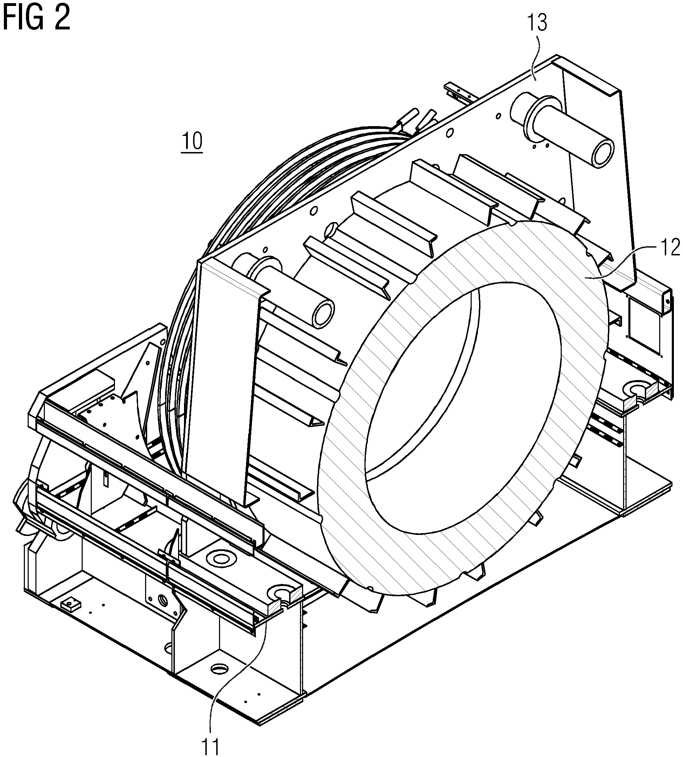

Die Darstellung nach Figur 2 zeigt wiederum einen Ausschnitt der elektrischen Maschine, und zwar im Detail ein Schnittstellenbauteil 11, mittels dessen ein Grundgestell 13 für den Stator 12 positioniert ist.

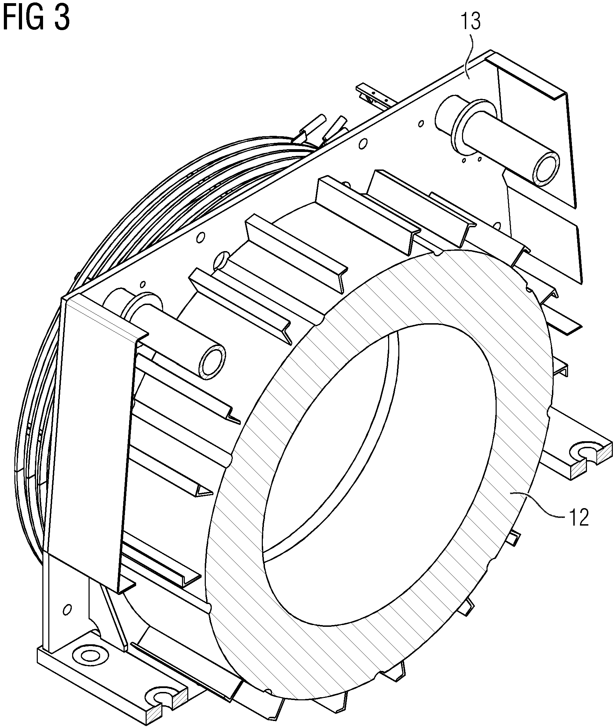

Die Darstellung nach Figur 3 zeigt einen Ausschnitt aus Figur 2, wobei Grundgestell 13 und Stator 12 fokussiert sind.

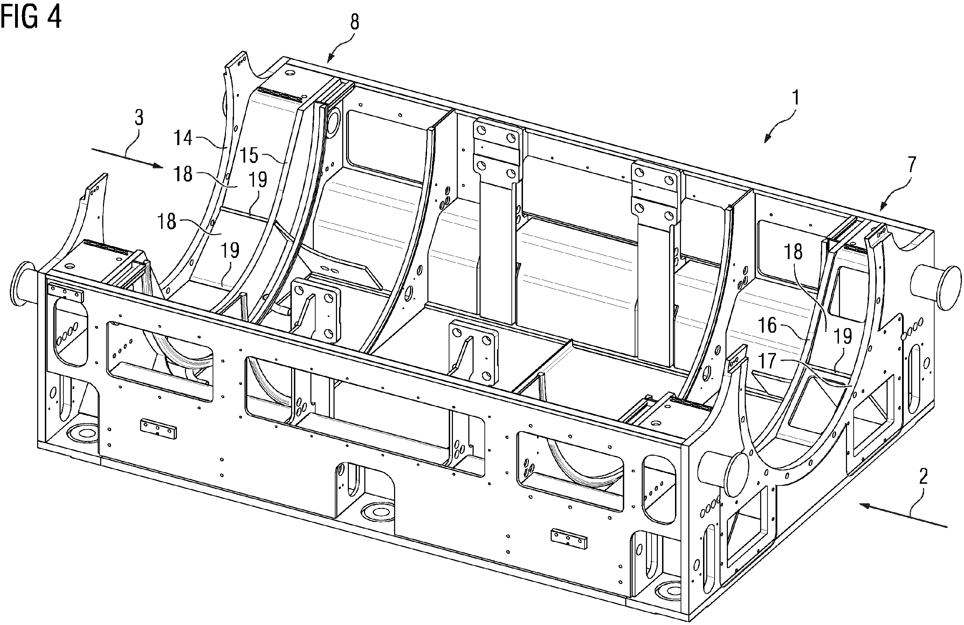

Die Darstellung nach Figur 4 zeigt eine doppelwandige Lageraufnahme 7 und 8 mit jeweils einer ersten Wandung 14 und 16 und jeweils einer zweiten Wandung 15 und 17. Die Steifigkeit der doppelwandigen Lageraufnahme 7 und 8 ist durch Rippen 19 und Platten 18 verstärkt. Durch die doppelwandige Gestaltung der Lageraufnahme am Maschinengehäuse wird eine deutlich höhere Steifigkeit erreicht. Die Lageraufnahme verhindert somit eine stärkere Schwingungsneigung der Lager durch Anregungen aus dem Rotor bzw. durch Schwingungen des Stators. Diese Gestaltung ermöglicht es durch zwei Wände mit optimierte Materialstärke und den dazwischen befindlichen Versteifungsrippen die Lageraufnahme deutlich steifer auszuführen, ohne dass sich das Gewicht des Gehäuses deutlich erhöht. Alternativ wäre eine Lageraufnahme mit einer dickeren Lagerwand und zusätzlichen dickeren Versteifungsrippen möglich.

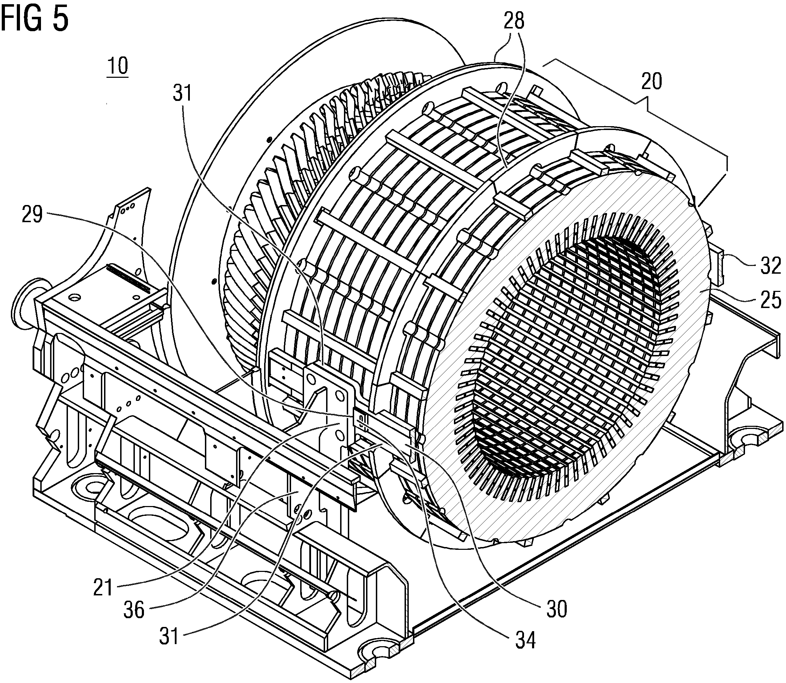

Die Darstellung nach Figur 5 zeigt eine Schnittdarstellung der elektrischen Maschine 10. Der Stator weist ein Statorblechpaket 25 auf. Dieses wird über Statorringelemente 28 mit statorseitigen Kopplungselementen 31, 32 verbunden. Die Kopplungselemente 31, 32, 21 befinden sich im Bereich des Statorblechpaketes 20. Ein gehäuseseitiges Kopplungselement 21 kann über Schraubverbindungen (dargestellt sind hierfür vier Löcher) mit dem statorseitigen Kopplungselement 31 verbunden werden (die Schrauben sind nicht dargestellt). Das erste gehäuseseitige Kopplungselement 21 ist mit einem Stabilisierungselement 36 verbunden. Die Kopplungselemente 21 und 31 weisen Nuten 29 und 30 zur Aufnahme einer Passfeder 34 auf.

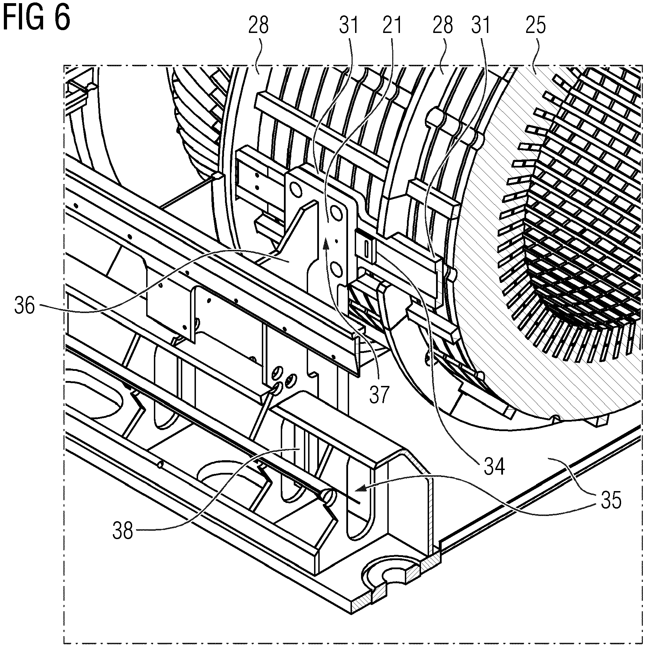

Die Darstellung nach Figur 6 zeigt die Kopplung nach Figur 5 im Detail. Gezeigt ist auch der Fußpunkt 35 in Bezug auf das Gehäuse 1 der elektrischen Maschine und der Fußteil 38 und der Kopfteil 37 des gehäuseseitigen Kopplungselementes 21 und damit auch das Kopfteil und das Fußteil des Stabilisierungselementes 36, welches im Kopfbereich und im Fußbereich mit dem gehäuseseitigen Kopplungselement verbunden ist und zu diesem senkrecht steht.

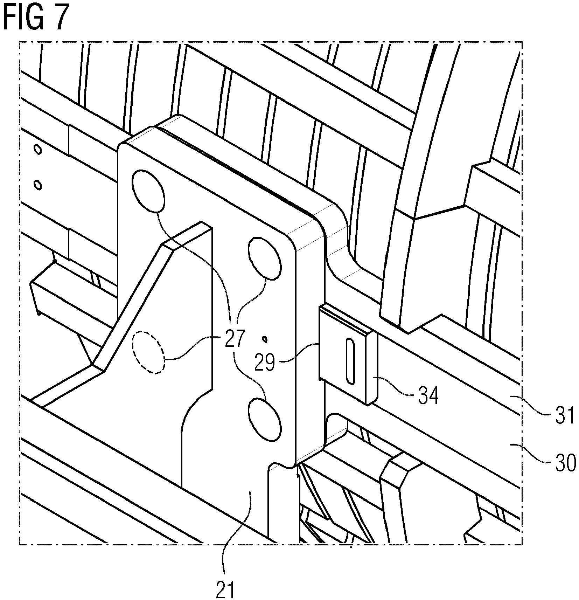

Die Darstellung nach Figur 7 zeigt eine weitere Detailansicht der Kopplung. Insbesondere ist gezeigt, wie sich die Passfeder 34 in die Nuten 29 und 30 fügt. Es sind vier Löcher 27 für Schraubverbindungen vorgesehen, wobei nur drei dargestellt sind.

## Patentansprüche

1. Elektrische Maschine (10), welche ein Gehäuse (1) aufweist, wobei das Gehäuse (1) eine doppelwandige Lageraufnahme (7,8) aufweist.

2. Elektrische Maschine (10) nach Anspruch 1, wobei zwischen der ersten Wand (14,16) und der zweiten Wand (15,17) der doppelwandigen Lageraufnahme (7,8) eine Versteifung ist.

3. Elektrische Maschine (10) nach Anspruch 2, wobei die Versteifung eine Vielzahl von Rippen (19) aufweist.

4. Elektrische Maschine (10) nach Anspruch 2 oder 3, wobei die Versteifung eine Vielzahl von Platten (18) aufweist.

5. Elektrische Maschine (10) nach einem der Ansprüche 1 bis 4, wobei das Lager mit einer Wandung (14,17) der doppelwandigen Lageraufnahme (7,8) starr verbunden ist.

6. Elektrische Maschine (10) nach einem der Ansprüche 1 bis 5, mit einem Gehäuse (1) und einem Stator (12), wobei der Stator (12) ein erstes statorseitiges Kopplungselement (31) aufweist und das Gehäuse (1) ein erstes gehäuseseitiges Kopplungselement (21) aufweist, wobei das erste statorseitige Kopplungselement (31) und das erste gehäuseseitige Kopplungselement (21) in einer Achshöhe (26) der elektrischen Maschine (10) sind und wobei das erste statorseitige Kopplungselement (31) und das erste gehäuseseitige Kopplungselement (21) im Bereich (20) des Statorblechpaketes (25) sind.

7. Elektrische Maschine (10) nach einem der Ansprüche 1 bis 6, wobei die Verbindung zwischen dem ersten statorseitigen Kopplungselement (31) und dem ersten gehäuseseitigen Kopplungselement (21) Schraubverbindungen (27) aufweist.

8. Elektrische Maschine (10) nach einem der Ansprüche 1 bis 7, wobei die Verbindung zwischen dem ersten statorseitigen Kopplungselement (31) und dem ersten gehäuseseitigen Kopplungselement (21) eine Passfeder (34) aufweist, wobei insbesondere der Stator (12) zum Gehäuse (1) mittels zumindest zweier Passfedern ausgerichtet ist.

9. Elektrische Maschine (10) nach einem der Ansprüche 1 bis 8, wobei das erste gehäuseseitiges Kopplungselement (21) und ein zweites gehäuseseitiges Kopplungselement (22) jeweils eine Verbindung mit dem ersten statorseitigen Kopplungselement (31) aufweisen.

10. Elektrische Maschine (10) nach einem der Ansprüche 1 bis 9, wobei das erste statorseitige Kopplungselement (31) in Statorringelementen (28) aufgenommen ist.

11. Elektrische Maschine (10) nach einem der Ansprüche 1 bis 10, wobei der Stator mittels zumindest vier Verbindungen (21,22,23,24) zwischen gehäuseseitigen Kopplungselementen (21) und statorseitigen Kopplungselementen (31) im Gehäuse befestigt ist, wobei die vier Verbindungen (21,22,23,24) durch eine flächige Ausgestaltung Ebenen aufspannen, wobei in einer der Ebenen die Rotationsachse der elektrischen Maschine (10) ist.

12. Elektrische Maschine (10) nach einem der Ansprüche 1 bis 11, wobei zumindest ein gehäuseseitiges Kopplungselement (21,22,23,24) mit einem Fußpunkt (35) des Gehäuses (1) verbunden ist.

13. Elektrische Maschine (10) nach einem der Ansprüche 1 bis 8, wobei zumindest ein gehäuseseitiges Kopplungselement (21,22,23,24) mit einem Stabilisierungselement (36) verbunden ist.

14. Elektrische Maschine (10) nach einem der Ansprüche 1 bis 13, wobei das Gehäuse (1) ein Basiselement (39) und ein Deckelelement aufweist.
